# EUROPÄISCHE PATENTSCHRIFT

(11) **EP 1 307 645 B1**
(45) Veröffentlichungstag und Bekanntmachung des Hinweises auf die Patenterteilung: **23.05.2007**
(21) Anmeldenummer: 01953904.8
(22) Anmeldetag: 10.07.2001
(51) Int. Cl.: F02M 25/08

(54) **VERFAHREN UND VORRICHTUNG ZUR ENERGIESPARENDEN DICHTHEITSPRÜFUNG EINER BRENNSTOFFTANKANLAGE INSBESONDERE EINES KRAFTFAHRZEUGES**
METHOD AND DEVICE FOR ENERGY-SAVING LEAK TESTING OF A FUEL TANK UNIT, IN PARTICULAR ON A MOTOR VEHICLE
PROCEDE ET DISPOSITIF PERMETTANT UNE VERIFICATION ECONOME EN ENERGIE DE L'ETANCHEITE D'UN SYSTEME DE RESERVOIR DE CARBURANT APPARTENANT NOTAMMENT A UN VEHICULE

(30) Priorität: 03.08.2000 DE 10038539
(43) Veröffentlichungstag der Anmeldung: 07.05.2003
(73) Patentinhaber: ROBERT BOSCH GMBH, 70442 Stuttgart (DE)
(72) Erfinder: STREIB, Martin, 71665 Vaihingen/Enz (DE)
(74) Vertreter: Jakelski, Joachim
(86) Internationale Anmeldenummer: PCT/DE2001/002569
(87) Internationale Veröffentlichungsnummer: WO 2002/012704

(56) Entgegenhaltungen:
- EP-A- 0 611 674
- EP-A- 0 952 332
- US-A- 6 073 487
- US-A- 6 089 081
- US-A1- 2001 022 173
- PATENT ABSTRACTS OF JAPAN & JP 2000 187578 A (RICOH CO LTD), 4. Juli 2000 (2000-07-04)

## Beschreibung

### Hintergrund der Erfindung

Die Erfindung betrifft ein Verfahren und eine Vorrichtung zum Betrieb einer Diagnoseeinheit zur Dichtheitsprüfung einer Tankanlage einer Brennkraftmaschine insbesondere eines Kraftfahrzeuges, wobei nach einem Abstellen der Brennkraftmaschine während einer Diagnosedauer für die Dichtheitsprüfung erforderliche Messdaten erfasst werden. Des Weiteren betrifft die Erfindung eine zur Ausführung des Verfahrens geeignete Diagnoseeinheit.

Ein Verfahren und ein Diagnosegerät zur Dichtheitsprüfung einer Tankanlage eines Kraftfahrzeuges ist beispielsweise aus der US 5,263,462 bekannt. Während einer Abstellphase des Fahrzeuges wird die Tankanlage mittels eines Magnetventils abgesperrt und innerhalb einer länger andauernden Diagnosezeit der Druck- und Temperaturverlauf im Tank mittels einer Sensorik erfasst und an das Steuergerät übermittelt.

Baut sich nun im Falle einer Abkühlung des Tanks innerhalb der Diagnosezeit ein Unterdruck auf, wird daraus auf die Dichtheit der Tankanlage geschlossen.

Nachteil dieser Vorgehensweise ist, dass das Steuergerät während der gesamten Diagnosezeit eingeschaltet sein muss. Außerdem muss auch das Magnetventil während der Diagnosezeit ständig bestromt werden. Dies bedingt während der Abstellphase einen hohen Energieverbrauch, der das elektrische Bordnetz des Fahrzeuges erheblich belastet. Dieser Problematik kann zum einen durch eine leistungsfähigere Auslegung des Bordnetzes begegnet werden, was allerdings höhere Kosten verursacht. Andererseits kann die Diagnosedauer verringert werden, was wiederum die Verlässlichkeit der Diagnose reduziert.

Die EP 0 952 332 A2 offenbart ein Verfahren und eine Vorrichtung zur Bestimmung von Leckagen im Kraftstoffversorgungssystem eines Kraftfahrzeuges, bei welchem eine Leckdiagnose bei abgestelltem Motor stattfindet. Auch hier muss das Steuergerät während der gesamten Diagnosezeit eingeschaltet sein.

In einem von Siemens und DaimlerChrysler in SAE-Toptec 99, Indianapolis, vorveröffentlichten Mechanismus wird nun der Tank mittels passiver Rückschlagventile, die stromlos schließen und daher im geschlossenen Zustand keine Energie verbrauchen, gegenüber der Umgebung abgesperrt. Im Falle einer Erwärmung des Tanks jedoch entsteht während der Abstellphase ein Überdruck im Tank, der bei Vorhandensein eines Lecks dazu führt, dass kohlenwasserstoffhaltiges Brennstoffgas bzw. - dampf aus der Tankanlage in die Umwelt entweichen kann. Zudem muss auch hier eine Erfassungselektronik während der gesamten Diagnosezeit kontinuierlich bestromt werden.

Des Weiteren ist in der Patentanmeldung DE 100 12 778 Al auf die in dem vorliegenden Zusammenhang vollumfänglich Bezug genommen wird (insbesondere auf die dortige Figur 3 nebst Beschreibung) eine Vorrichtung zum emissionsarmen Betrieb einer Brennstofftankanlage beschrieben, die unter anderem ein Aktivkohlefilter zur Abführung überschüssiger Brennstoffgase, eine Steuereinheit sowie insbesondere ein stromlos bistabiles Magnetventil, das sowohl im geschlossenen als auch im geöffneten Zustand stromlos verharrt, aufweist. Nur zum Umschalten zwischen diesen beiden Zuständen wird ein Stromimpuls benötigt. Die Steuereinheit ist mit einem innerhalb eines Brennstofftanks angeordneten ersten Drucksensor sowie mit einem außerhalb des Brennstofftanks angeordneten zweiten Drucksensor elektrisch verbunden. Alternativ werden auch entsprechende Temperatursensoren angegeben. Aus den erfassten Druckdaten bewertet die Steuereinheit, ob nach dem Abstellen des Fahrzeuges mit einem Unterdruck oder mit einem Überdruck im Tank zu rechnen ist. Im Falle, dass die Auswertung der Druckdaten ergibt, dass nach dem Abstellen des Fahrzeuges ein gegenüber dem Umgebungsdruck bestehender Überdruck zu erwarten ist, wird das Magnetventil geöffnet, um das überschüssige Brennstoffgas über das Aktivkohlefilter und damit emissionsarm in die Umgebung zu leiten. Im Falle eines zu erwartenden Unterdrucks hingegen bleibt das Magnetventil geschlossen, wonach die Dichtheitsprüfung mittels des Unterdrucks entsprechend der in der US 5,263,462 vorgeschlagenen Vorgehensweise erfolgen kann.

Mit dieser Vorrichtung wird das oben genannte Emissionsproblem weitgehend eliminiert. Im Gegensatz zur US 5,263,462 wird zusätzlich der Stromverbrauch des Magnetventils vermieden. Es besteht allerdings nach wie vor der Nachteil, dass die Steuereinheit über die gesamte Diagnosezeit aktiv sein muss.

### Zusammenfassung der Erfindung

Es ist daher Aufgabe der vorliegenden Erfindung, ein Verfahren und eine Diagnoseeinheit der eingangs genannten Gattung anzugeben, die eine Minimierung des Energieverbrauchs während eines vorbeschriebenen Diagnosetests ermöglichen und dabei gleichzeitig auch die Emission von Brennstoffgasen möglichst verhindern.

Die Aufgabe wird gelöst durch die Merkmale der unabhängigen Ansprüche. Vorteilhafte Weiterbildungen sind Gegenstand der abhängigen Ansprüche.

Die Besonderheit der Erfindung liegt darin, dass die Diagnoseeinheit nach dem Abstellen der Brennkraftmaschine für ein vorgegebenes erstes Zeitintervall in einen Schlafmodus übergeht, dass die Diagnoseeinheit nach Ablauf des ersten zeitintervalls in einen Aufweckmodus übergeht und in dem Aufweckmodus wenigstens die Messdaten erfasst, dass die Diagnoseeinheit danach innerhalb der Diagnosedauer wieder in den Schlafmodus übergeht, und dass die Diagnoseeinheit nach Ablauf der Diagnosedauer ganz ausgeschaltet wird.

Durch den vorgeschlagenen Intervallbetrieb der Diagnoseeinheit, d.h. den zwischen Schlaf- und Aufweckmodus wechselnden Betrieb, wird vorteilhaft vermieden, dass die Diagnoseeinheit während der gesamten Diagnosedauer Strom verbraucht, welcher die Batterien des Fahrzeuges und/oder der Tankanlage während der Abstell- oder Ruhephase erheblich beanspruchen würden.

Die Diagnoseeinheit kann nun nach dem Abstellen der Brennkraftmaschine entweder zunächst innerhalb des zweiten Zeitintervalls die Messdaten erfassen und erst danach in den Schlafmodus übergehen oder bereits nach dem Abstellen der Brennkraftmaschine in den Schlafmodus übergehen und erst nach Ablauf des ersten Zeitintervalls erstmalig die Messdaten erfassen.

Über den vorgeschlagenen Aufweckmechanismus kann die Diagnoseeinheit in regelmäßigen Zeitintervallen für ein zweites Zeitintervall, d.h. insbesondere den Messzeitraum, reaktiviert werden. Nach dem Aufwachen liest die Diagnoseeinheit dann die für die Diagnose notwendigen Sensorsignale, d.h. den Tankinnendruck und ggf. den Tankaußendruck sowie die Tankinnentemperatur und ggf. die Tankaußentemperatur ein.

Anschließend schaltet sich die Diagnoseeinheit wieder ab, um dann nach einem weiteren Zeitintervall wieder geweckt zu werden. Die Länge der Zeitintervalle, nach denen die Diagnoseeinheit aufgeweckt wird, kann entweder fest vorgegeben oder über die Zeit progressiv veränderlich sein. Beispielsweise kann das Zeitintervall mit zunehmender Abstellzeit des Fahrzeuges linear oder nicht-linear, insbesondere exponentiell, verlängert werden, um an das ebenfalls einem exponentiellen Zeitgesetz folgende Leckverhalten eines angenommenen Lecks angepasst zu sein und daher die Messdaten entsprechend angepasst aufzunehmen. Der genannte Vorgang kann solange wiederholt werden, bis ein Diagnoseergebnis vorliegt oder es kann alternativ eine Diagnosedauer fest vorgegeben werden.

Es versteht sich, dass das Verfahren entweder von der Diagnoseeinheit selbst oder einer zusätzlichen, die Diagnoseeinheit steuernden Steuereinheit ausgeführt werden kann. Es versteht sich ferner, dass der Einschlafmodus auch einen echten Abschaltmodus darstellen kann, beispielsweise im Falle eines nicht volatilen Speichers zur Aufnahme der Messdaten. Im Falle eines solchen Abschaltmodus' wird die Diagnoseeinheit nach Ablauf des ersten Zeitintervalls jeweils neu gestartet.

Eine besondere Variante der Erfindung ergibt sich beim Einsatz in einer Tankanlage mit einem stromlos öffnenden und schließenden Magnetventil sowie einem Aktivkohlefilter (siehe o.g. Druckschrift DE xx xxx xxx, mittels dessen im Falle eines Überdrucks in der Tankanlage überschüssiges Brennstoffgas über das Aktivkohlefilter nach außen geleitet werden kann. Bei dieser Ausgestaltung beurteilt die Diagnoseeinheit im Aufweckmodus auch, ob die jeweils vorliegende Stellung des Magnetventils zu verändern ist und führt danach die Änderung gegebenenfalls bereits aus.

### Zeichnung

Die Erfindung wird nachfolgend anhand von in der Zeichnung dargestellten Ausführungsbeispielen eingehender erläutert, aus denen sich weitere Merkmale und Vorteile der Erfindung ergeben, wobei im Einzelnen zeigen:
- Fig. 1: eine Tankanlage mit einer Diagnoseeinheit zur Ausführung des erfindungsgemäßen Verfahrens und
- Fig. 2: ein Ausführungsbeispiel des erfindungsgemäßen Verfahrens anhand eines Flussdiagramms.

### Beschreibung der Ausführunqsbeispiele

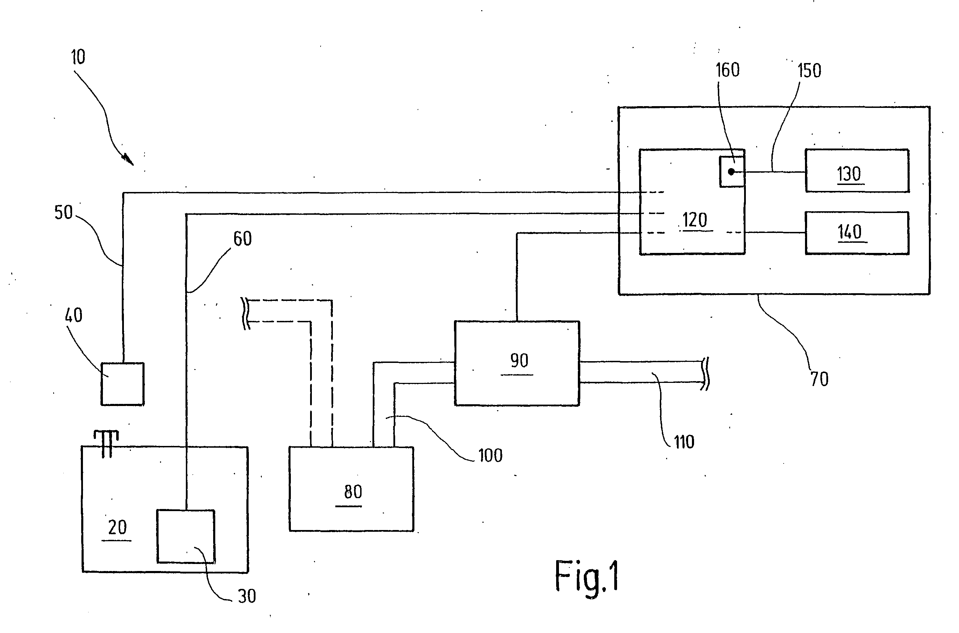

Die in Fig. 1 gezeigte Tankanlage 10 eines (hier nicht dargestellten) Motors eines Kraftfahrzeuges weist einen Tank 20 auf, in dessen Innenbereich ein erster Drucksensor 30 zur Erfassung des Tankinnendrucks sowie ein außerhalb des Tanks 20 angeordneter zweiter Drucksensor 40 zur Erfassung des Umgebungsdrucks vorgesehen sind. Es ist anzumerken, dass neben den beiden bzw. anstatt der beiden Drucksensoren 30, 40 auch Temperatursensoren oder dergleichen eingesetzt werden können, um die für eine Tankleckdiagnose erforderlichen Druckdaten im Tank 20 zu erfassen.

Die beiden Drucksensoren 30, 40 sind über Signalleitungen 50, 60 mit einer erfindungsgemäßen Diagnoseeinheit 70 verbunden. Der Tank 20 ist druckleitend mit einem Aktivkohlefilter 80 verbunden, das unter anderem eine mit einem bistabilen Magnetventil 90 verbundene Leitung 100 aufweist. Das Magnetventil 90 weist ferner eine in die Umgebung führende Abgasleitung 110 auf. Das Magnetventil 90 ist sowohl in der geöffneten als auch in der geschlossenen Stellung stromlos betreibbar. Die Diagnoseeinheit 70 beinhaltet ein Prozessormodul 120, einen permanent bestromten Zeitgeber (Timer) 130 sowie einen Komparator (Compare-Register) 140, das einen vernachlässigbaren Stromverbrauch hat, beinhaltet.

Nach dem Abstellen des Motors, und sofern eine Diagnose gefordert ist, lädt die Diagnoseeinheit 70 das Compare-Register 140 mit einem Zeitintervallwert, nach dem das nächste Wecken der Diagnoseeinheit 70 bzw. des Prozessormoduls 120 erfolgen soll. Wenn der Zeitgeber 130 diesen, im Compare-Register 140 eingetragenen Wert hat, löst der Zeitgeber 130 über eine Leitung 150, die in dem vorliegenden Beispiel an einen Reset-Eingang 160 des Prozessormoduls 120 angeschlossen ist, das Einschalten des Prozessormoduls 120 aus, worauf die Diagnoseeinheit 70 die notwendigen Aktionen zur Dichtheitsprüfung ausführt, also beispielsweise den Tankinnendruck und den Umgebungsdruck lädt und ggf. auswertet.

Nach Beendigung dieser Aktionen wird das Compare-Register 140 mit einem Zeitintervallwert neu geladen, wobei dieser Wert entweder einen fest vorgegebenen Wert oder einen bei jedem Neuladen des Compare-Registers 140 progressiv ansteigenden, z.B. exponentiell ansteigenden Wert darstellt. Gleichermaßen wird der Zeitgeber 130 zurückgesetzt und erneut gestartet. Anschließend wird die Diagnoseeinheit 70, d.h. insbesondere das Prozessormodul 120, ggf. einschließlich der Drucksensoren 30, 40, vorübergehend abgeschaltet bzw. in einen Schlafmodus versetzt.

Der beschriebene Vorgang wird wiederholt, bis die Diagnose beendet ist. Nach Ablauf der Diagnosedauer wird der Zeitgeber 130 vor dem Abschalten nicht mehr gestartet, so dass die Diagnoseeinheit 70 dann permanent abgeschaltet bleibt, um weiterhin Energie einzusparen.

In dem Ausführungsbeispiel ist ferner vorgesehen, dass die Diagnoseeinheit 70 nach dem Einschalten des Prozessormoduls 120 auch prüft, ob nach den erfassten Druckdaten ein Überdruck im Tank 20 vorliegt. Ist dies der Fall wird weiter geprüft, ob die Stellung des Magnetventils 90 'offen' ist, damit überschüssiger Brennstoffdampf oder Brennstoffgas über die Abgasleitung 110 nach außen geführt werden kann. Ist die derzeitige Stellung 'geschlossen', veranlasst die Diagnoseeinheit 70 eine Änderung der Magnetventilstellung in 'offen'.

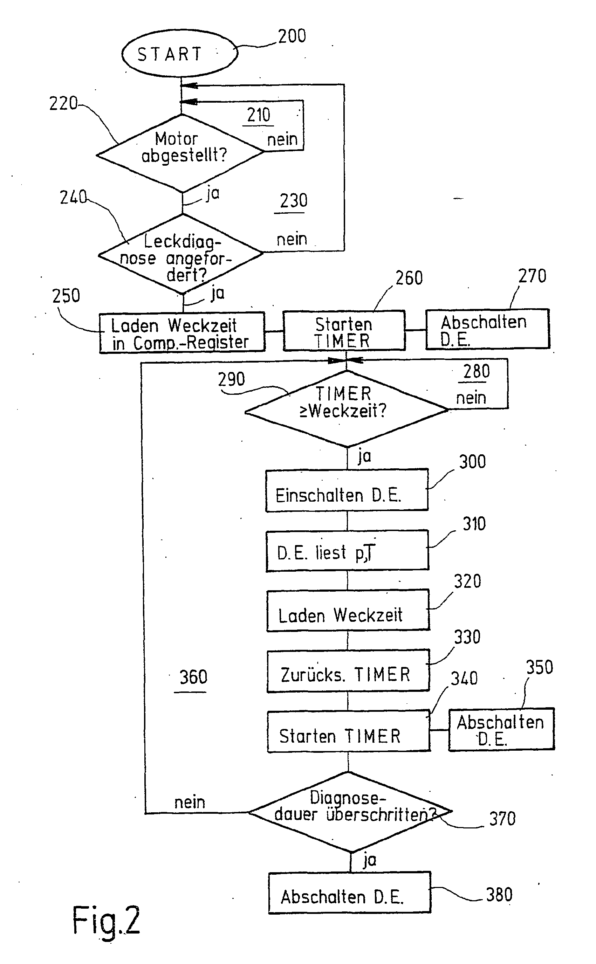

Fig. 2 zeigt, als Ausführungsbeispiel des erfindungsgemäßen Verfahrens, eine Programmroutine für den in Fig. 1 beschriebenen Einsatz in einer Diagnoseeinheit eines Kraftfahrzeuges.

Nach dem Start 200 der Routine wird zunächst in einer ersten Programmschleife 210 geprüft 220, ob der Motor des Kraftfahrzeuges abgestellt wurde. Ist dies der Fall, wird in einer zweiten Programmschleife 230 geprüft 240, ob eine Leckdiagnose, z.B. nach einem (nicht dargestellten) übergeordneten Wartungsprogramm, angefordert wurde. Falls nicht, wird wieder in die erste Schleife 210 zurückgesprungen. Liegt eine solche Anforderung vor, wird ein Wert einer Weckzeit, z.B. 5 min., in das Compare-Register geladen 250. Danach wird der Zeitgeber gestartet 260 und die Diagnoseeinheit in einen Schlafmodus versetzt oder abgeschaltet 270.

In einer dritten Programmschleife 280 wird gepüft 290, ob der aktuelle Wert des Zeitgebers größer oder gleich der Weckzeit ist. Ist dies der Fall, wird die Diagnoseeinheit in einen Wachmodus versetzt bzw. eingeschaltet 300 und liest 310 aktuelle Sensordaten für Druck bzw. Temperatur aus. Im Anschluss daran wird das Compare-Register wieder geladen 320, der Zeitgeber erneut zurückgesetzt 330 und der Zeitgeber neu gestartet 340. Gleichzeitig wird die Diagnoseeinheit wieder abgeschaltet 350.

Mittels einer vierten Programmschleife 360 werden die vorbeschriebenen Schritte solange wiederholt, bis die Diagnose beendet ist bzw. die Diagnosedauer erreicht ist 370. Nach Überschreiten der Diagnosedauer wird die Diagnoseeinheit permanent abgeschaltet 380.

Es versteht sich, dass die Erfindung nicht nur bei Tankanlagen von Kraftfahrzeugen vorteilhaft eingesetzt werden kann, sondern grundsätzlich bei sämtlichen Tankanlagen von Brennkraftmaschinen, bei denen Dichtheitsprüfungen im Ruhebetrieb durchgeführt werden.

## Patentansprüche

1. Verfahren mit zur Dichtheitsprüfung einer Tankanlage (10) einer Brennkraftmaschine insbesondere eines Kraftfahrzeuges einer Diagnoseeinheit (70), wobei nach einem Abstellen der Brennkraftmaschine während einer Diagnosedauer für die Dichtheitsprüfung erforderliche Messdaten erfasst werden, **dadurch gekennzeichnet, dass** die Diagnoseeinheit (70) nach dem Abstellen der Brennkraftmaschine (220) für ein vorgegebenes erstes Zeitintervall in einen Schlafmodus übergeht (270), dass die Diagnoseeinheit (70) nach Ablauf des ersten Zeitintervalls in einen Aufweckmodus übergeht (300) und in dem Aufweckmodus wenigstens die Messdaten erfasst (310), dass die Diagnoseeinheit (70) danach innerhalb der Diagnosedauer wieder in den Schlafmodus übergeht (350), und dass die Diagnoseeinheit (70) nach Ablauf der Diagnosedauer ausgeschaltet wird (380).

2. Verfahren nach Anspruch 1, **dadurch gekennzeichnet, dass** die Diagnosedauer, in Abhängigkeit von dem Vorliegen eines Diagnoseergebnisses, dynamisch festgelegt wird.

3. Verfahren nach Anspruch 1 oder 2, **dadurch gekennzeichnet, dass** die Länge des ersten Zeitintervalls mit zunehmender Abstellzeit des Kraftfahrzeugs linear oder nicht linear, insbesondere exponentiell verlängert wird.

4. Verfahren nach einem der vorhergehenden Ansprüche, **dadurch gekennzeichnet, dass** die Diagnoseeinheit innerhalb eines wenigstens zweiten Zeitintervalls in den Aufweckmodus übergeht und innerhalb des wenigstens zweiten Zeitintervalls wenigstens die Messdaten erfasst.

5. Verfahren nach einem der vorhergehenden Ansprüche bei einer Tankanlage (10) mit einem Umschaltventil (90) und einem Filter (80), mittels derer im Falle eines Überdrucks in der Tankanlage (10) überschüssiges Brenngas über das Filter (80) nach außen geleitet wird, **dadurch gekennzeichnet, dass** die Diagnoseeinheit (70) in dem Aufweckmodus zusätzlich beurteilt, ob die Stellung des Umschaltventils (90) zu verändern ist und danach die Änderung gegebenenfalls veranlasst.

6. Diagnoseeinheit (70) mit Mitteln zur Ausführung eines Verfahrens nach einem der Ansprüche 1 bis 5, wobei die Mittel eine Sensorik (30, 40) zur Erfassung von für die Dichtheitsprüfung erforderlichen Messdaten, umfassen, sowie Mittel (120) zum Erfassen des Abstellens der Brennkraftmaschine, Zeitgebermittel (130) zur Vorgabe eines ersten Zeitintervalls, sowie Einschlaf-/Aufweckmittel (160) mittels derer die Diagnoseeinheit (70) in einen Schlafmodus und nach Ablauf des ersten Zeitintervalls in einen Wachmodus, in dem wenigstens die Messdaten erfasst werden, versetzt wird.

7. Diagnoseeinheit (70) nach Anspruch 6 zum Einsatz bei einer Tankanlage (10) mit einem Umschaltventil (90) und einem Filter (80), mittels derer im Falle eines Überdrucks in der Tankanlage (10) überschüssiges Brenngas über das Filter (80) nach außen geleitet wird, **dadurch gekennzeichnet, dass** die Diagnoseeinheit (70) Prozessormittel (120) aufweist, mittels derer eine Feststellung getroffen wird, ob die Ventilstellung zu verändern ist, und mittels derer gegebenenfalls eine Änderung der Ventilstellung veranlasst wird.

8. Diagnoseeinheit nach Anspruch 6 oder 7, **gekennzeichnet durch** Zeitgebermittel (130) zur Vorgabe eines ersten Zeitintervalls, nach dessen Ablauf aus dem Schlafbetriebsmodus in den Wachbetriebsmodus umgeschaltet wird.

9. Diagnoseeinheit nach Anspruch 8, **gekennzeichnet durch** wenigstens ein Compare-Register (140) zur Aufnahme des ersten Zeitintervalls.

## Claims

1. Method for leak testing a tank system (10) of an internal combustion engine, in particular of a motor vehicle, having a diagnostic unit (70), with the measurement data required for the leak testing process being measured during a diagnostic period after the internal combustion engine is switched off, **characterized in that** the diagnostic unit (70) switches (270) to a sleep mode for a predefined first time interval after the internal combustion engine (220) is switched off, **in that** the diagnostic unit (70) switches (300) to a wake-up mode after the first time interval has expired and, in the wake-up mode, measures (310) at least the measurement data, **in that** the diagnostic unit (70) then switches, again to the sleep mode (350) within the diagnostic period, and **in that** the diagnostic unit (70) is switched off (380) after the diagnostic period has expired.

2. Method according to Claim 1, **characterized in that** the diagnostic duration is determined dynamically as a function of the presence of a diagnostic result.

3. Method according to Claim 1 or 2, **characterized in that** the length of the first time interval is extended linearly or non-linearly, in particular exponentially, as the time for which the motor vehicle is switched off increases.

4. Method according to one of the preceding claims, **characterized in that** the diagnostic unit switches to the wake-up mode within an at least second time interval and measures at least the measurement data within the at least second time interval.

5. Method according to one of the preceding claims in a tank system (10) having a switching valve (90) and a filter (80), by means of which excess combustion gas is conducted out via the filter (80) in the event of an overpressure in the tank system (10), **characterized in that**, in the wake-up mode, the diagnostic unit (70) additionally assesses whether the position of the switching valve (90) should be changed and then carries out the change if appropriate.

6. Diagnostic unit (70) having means for carrying out a method according to one of Claims 1 to 5, the means comprising a sensor arrangement (30, 40) for measuring measurement data required for the leak testing process, and means (120) for detecting when the internal combustion engine is switched off, clock means (130) for predefining a first time interval, and sleep/wake-up means (160), by means of which the diagnostic unit (70) is set to a sleep mode, and, after the first time interval has expired, to a wake-up mode in which at least the measurement data are measured.

7. Diagnostic unit (70) according to Claim 6 for use in a tank system (10) having a switching valve (90) and a filter (80), by means of which excess combustion gas is conducted out via the filter (80) in the event of an overpressure in the tank system (10), **characterized in that** the diagnostic unit (70) has processor means (120), by means of which it is established whether the valve position should be changed and by means of which a change in the valve position is carried out if appropriate.

8. Diagnostic unit according to Claim 6 or 7, **characterized by** clock means (130) for predefining a first time interval, after the expiration of which a switch is made from the sleep operating mode to the wake-up operating mode.

9. Diagnostic unit according to Claim 8, **characterized by** at least one compare register (140) for recording the first time interval.

## Revendications

1. Procédé de contrôle d'étanchéité d'une installation de réservoir (10) d'un moteur à combustion interne, en particulier d'un véhicule automobile, avec une unité de diagnostic (70), selon lequel on saisit des données de mesure nécessaires pour le contrôle d'étanchéité après un arrêt du moteur à combustion pendant une durée de diagnostic,
**caractérisé en ce que**
l'unité de diagnostic (70) passe en mode de sommeil (270) pour un premier intervalle de temps prédéterminé après l'arrêt du moteur à combustion interne (220), l'unité de diagnostic (70) passe en mode de veille (300) à l'expiration du premier intervalle de temps et détecte au moins les données de mesure (310) dans le mode de veille, l'unité de diagnostic (70) passe ensuite de nouveau en mode de sommeil (350) à l'intérieur de la durée du diagnostic, l'unité de diagnostic (70) se coupe à l'expiration de la durée de diagnostic (380).

2. Procédé selon la revendication 1,
**caractérisé en ce que**
la durée de diagnostic est fixée de façon dynamique en fonction de la présence d'un résultat de diagnostic.

3. Procédé selon la revendication 1 ou 2,
**caractérisé en ce qu'**
on prolonge la longueur du premier intervalle de temps de façon linéaire ou non linéaire, notamment exponentielle, lorsque le temps d'arrêt du véhicule automobile augmente.

4. Procédé selon l'une quelconque des revendications précédentes,
**caractérisé en ce que**
l'unité de diagnostic passe en mode de veille à l'intérieur d'au moins un deuxième intervalle de temps et saisit au moins les données de mesure à l'intérieur au moins du deuxième intervalle de temps.

5. Procédé selon l'une quelconque des revendications précédentes, pour une installation de réservoir (10) ayant une soupape d'inversion (90) et un filtre (80), au moyen desquels, en cas de surpression dans l'installation de réservoir (10), le gaz carburant en excès est évacué vers l'extérieur via le filtre (80),
**caractérisé en ce que**
l'unité de diagnostic (70) juge en plus, en mode de veille, si la position de la soupape d'inversion (30) doit être changée et commande ensuite éventuellement le changement.

6. Unité de diagnostic (70) avec des moyens permettant la mise en oeuvre d'un procédé selon l'une quelconque des revendications 1 à 5, les moyens comprenant des moyens de saisie (30, 40) pour saisir des données de mesure nécessaires pour le contrôle d'étanchéité, ainsi que des moyens (120) pour détecter l'arrêt du moteur à combustion interne, des moyens d'horloge (130) pour prédéterminer un premier intervalle de temps, ainsi que des moyens de mise en sommeil/veille (160) permettant de mettre l'unité de diagnostic (70) dans un mode de sommeil et après l'expiration du premier intervalle de temps dans un mode de veille, dans lequel on saisit au moins les données de mesure.

7. Unité de diagnostic (70) selon la revendication 6 à utiliser avec une installation de réservoir (10) comprenant une soupape d'inversion (90) et un filtre (80), au moyen desquels, en cas de surpression dans le système de réservoir (10), le gaz carburant en excès est évacué vers l'extérieur via le filtre (80),
**caractérisé en ce que**
l'unité de diagnostic (70) comprend des moyens de processeur (120), au moyen desquels on constate si la position de la soupape doit être changée et on commande éventuellement un changement de la position de la soupape.

8. Unité de diagnostic selon la revendication 6 ou 7,
**caractérisée par**
des moyens d'horloge (130) permettant de prédéterminer un premier intervalle de temps, à l'expiration duquel on passe du mode de sommeil au mode de veille.

9. Unité de diagnostic selon la revendication 8,
**caractérisée par**
au moins un registre de comparaison (140) pour enregistrer le premier intervalle de temps.
